# EUROPEAN PATENT SPECIFICATION

(11) **EP 2 940 332 B1**
(45) Date of publication and mention of the grant of the patent: **08.02.2017**
(21) Application number: 13868545.8
(22) Date of filing: 19.12.2013
(51) Int. Cl.: F16C 43/04, B23P 19/04, B23P 21/00, F16C 19/16, F16C 33/64

(54) **ASSEMBLING DEVICE FOR ANGULAR BALL BEARING AND ASSEMBLING METHOD FOR ANGULAR BALL BEARING**
MONTAGEVORRICHTUNG FÜR SCHRÄGKUGELLAGER UND MONTAGEVERFAHREN FÜR SCHRÄGKUGELLAGER
DISPOSITIF D'ASSEMBLAGE POUR ROULEMENT À BILLES ANGULAIRE ET PROCÉDÉ D'ASSEMBLAGE POUR ROULEMENT À BILLES ANGULAIRE

(30) Priority: 26.12.2012 JP 2012283186
(43) Date of publication of application: 04.11.2015
(73) Proprietor: NSK Ltd., Tokyo 141-8560 (JP)
(72) Inventor: SEKINE Masaaki, Fujisawa-shi Kanagawa 251-8501 (JP); KAWAMATA Takeo, Fujisawa-shi Kanagawa 251-8501 (JP); CHIBA Kazuyasu, Fujisawa-shi Kanagawa 251-8501 (JP)
(74) Representative: Grünecker Patent- und Rechtsanwälte PartG mbB
(86) International application number: PCT/JP2013/084165
(87) International publication number: WO 2014/103899

(56) References cited:
- JP-A- H02 167 637
- JP-A- 2002 219 623
- JP-A- 2004 092 755
- JP-U- S5 880 130

## Description

### TECHNICAL FIELD

The invention relates to an assembling device for an angular ball bearing and an assembling method for an angular ball bearing.

### BACKGROUND ART

An angular ball bearing is a bearing in which a specific contact angle is set between balls serving as rolling elements and inner and outer rings and to which a radial load and an axial load can be loaded.

In use, two or more of such angular ball bearings are combined together and, by loading a preload on them in the axial direction (thrust direction), they can have specific rigidity. In such loading, when a difference in the axial widths between the inner and outer rings (differential width) is out of the allowable range corresponding to the preload grade, the bearing performance such as the load resistance or vibration characteristics is impaired and, therefore, it is necessary to carry out differential width grinding for controlling the differential width within the allowable range from the reference value.

### (Conventional differential width grinding method 1)

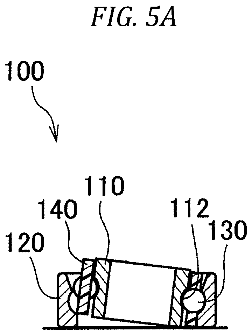

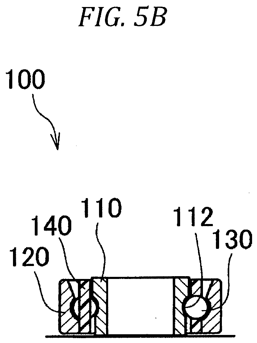

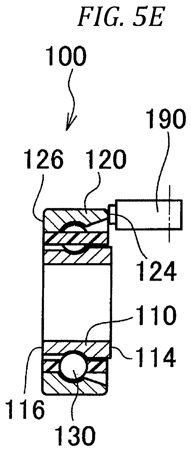

There is known well a differential width grinding method, which, as shown in Figs. 5A ∼ 5E, while angular ball bearings are held in an assembled state, carries out differential width measurement and differential width grinding. More specifically, firstly, on an inner ring raceway surface 112 formed in the outer peripheral surface of an inner ring 110, there are arranged multiple balls 130 at specific intervals in the peripheral direction by a retainer 140 (see Fig. 5A). Next, the inner ring 110, multiple balls 130 and retainer 140 are press fixed to an outer ring 120 by shrink fit, thereby setting an angular ball bearing 100 into its assembled state (see Fig. 5B).

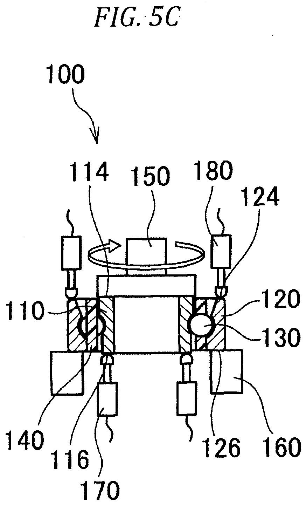

And, as shown in Fig. 5C, the axial one end face 114 of the inner ring 110 is rotatably held by a rotation jig 150 and the axial other end face 116 is contacted with a differential width check sensor 170. Also, the axial other end face 126 of an outer ring 120 is rotatably held by a jig 160 and the axial one end face 124 is contacted with the other differential width check sensor 180. Here, when the inner ring 110 is rotated by the rotation jig 150, the multiple balls 130 are displaced in the peripheral direction (revolved) and thus the outer ring 120 is also rotated integrally. In this state, the differential width check sensors 170 and 180 calculate the average value of the axial widths of the inner and outer rings 110 and 120 and, according to the average value, calculate a grinding amount.

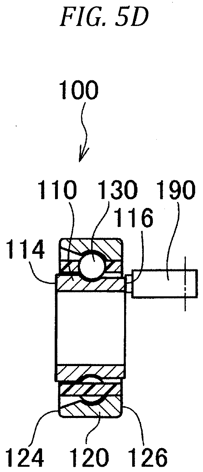

Next, according to the calculated grinding amount, using a whetstone 190, the inner and outer rings 110 and 120 are ground to thereby adjust their axial widths. Here, for example, as shown in Fig. 5D, when the whetstone 190 is arranged on the axial other end side of the angular ball bearing 100, after the axial other end face 116 of the inner ring 110 is ground, the angular ball bearing 100 is reversed to be symmetrical on a plane orthogonal to the axial direction and the axial one end face 124 of the outer ring 120 is ground using the whetstone 190. Through the foregoing step, the differential width of the inner and outer rings 110 and 120 can be controlled within the allowable range from the specific reference value.

### (Conventional differential width grinding method 2)

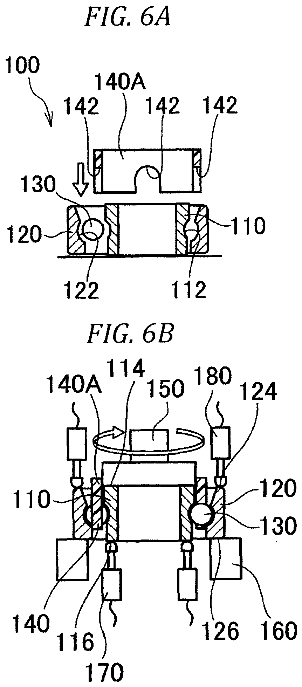

There is also known another differential width grinding method which, after a differential width is measured while an angular ball bearing is temporarily assembled, disassembles it once and then grinds the differential width. In this method, as shown in Fig. 6A, firstly, multiple balls 130 are mounted between the inner ring raceway surface 112 of the inner ring 110 and the outer ring raceway surface 122 of the outer ring 120. Here, the number of balls 130 is set smaller than that of balls 130 to be mounted into the angular ball bearing 100 as a completed product. Next, a temporary retainer 140A is inserted into a clearance between the inner and outer rings 110 and 120, whereby the balls 130 are retained in the pockets 142 and are arranged at specific intervals in the peripheral direction.

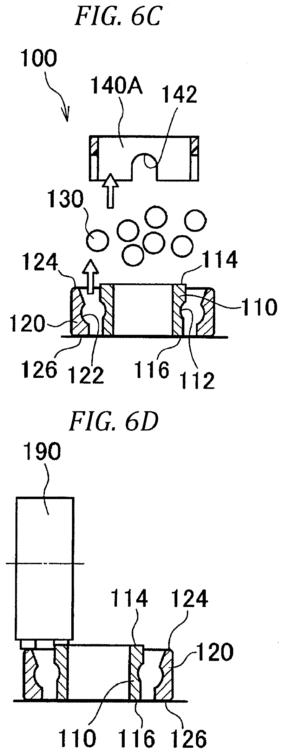

In the temporarily assembled angular ball bearing 100, as shown in Fig. 6B, by a similar method to the above one (see Fig. 5C), a grinding amount is calculated. Then, as shown in Fig. 6C, the temporary retainer 140A and multiple balls 130 are collected. Next, as shown in Fig. 6D, according to the calculated grinding amount, using the whetstone 190, the axial one end face 114 of the inner ring 110 and the axial one end face 124 of the outer ring 120 are ground to thereby adjust the axial widths of the inner and outer rings 110 and 120.

Like the above method 1, in a method for grinding the differential width with the angular ball bearing held in the assembled state, productivity is good but abrasive grains produced in grinding remain within the bearing to worsen the cleanness degree and damage the raceway surfaces and balls, thereby reducing the yield of products.

Thus, in order to enhance the yield of products, use of the method 2 capable of providing a high cleanness degree may be expected. However, since the temporary assembly (ball mounting) and disassembly (ball collection) of the angular ball bearing take time, the cycle time increases, thereby raising a fear of productivity being worsened. Thus, it has been desired that the temporary assembly (ball mounting) and disassembly (ball collection) of the angular ball bearing must be carried out quickly by complete automation.

The patent document 1 ∼ 3 disclose assembling devices which mounts a specified number of balls into multiple rows of grooves in a double row ball bearing for assembling. In these assembling devices, integrated or paired upper-side ball support jigs capable of swinging and vertically operating are inserted into inter-inner-and-outer-ring positions between the upper- and lower-side ball rows of a double row ball bearing and, after a specified number of upper-side balls are mounted, with the bearing inner and outer rings aligned with each other, the upper-side ball support jigs are removed from the portion that is not occupied by the upper-side balls.

Therefore, by applying the technology of the patent document 1 ∼ 3 to the above method 2, temporary assembly of the angular ball bearing, that is, automatic mounting of the multiple balls may be expected.

### RELATED ART REFERENCE

### PATENT DOCUMENT

Patent Document 1: JPA Publication No. Hei-7-96176
Patent Document 2: JPA Publication No. 2002-219623
Patent Document 3: JPA Publication No. Hei-1-16616

Patent document 2 is considered as the closest prior art for the subject matter of the independent claims of the present application.

### SUMMARY OF THE INVENTION

### PROBLEMS TO BE SOLVED BY THE INVENTION

However, the patent document 1 ∼ 3 give no description of an angular ball bearing disassembling method, that is, a method for collecting the multiple balls and it takes time to collect the balls, thereby leaving room for productivity enhancement.

The invention aims at solving the above problems and thus has an object to provide an assembling device for an angular ball bearing and an assembling method for an angular ball bearing capable of quick mounting and collection of the balls of an angular ball bearing.

### MEANS FOR SOLVING THE PROBLEMS

The object of the invention is achieved by the features of independent claims 1 and 4. Preferred embodiments are stated in the dependent claims.

The object of the invention is achieved by the following configurations.
(1) An assembling device for assembling an angular ball bearing including an inner ring, an outer ring and multiple balls, the assembling device being configured to mount multiple balls into a clearance between the inner and outer rings and configured to collect the multiple balls from the clearance, and including:
   a rotation mechanism configured to relatively rotate the inner and outer rings;
   a displacement mechanism configured to relatively displace the inner and outer rings along a plane orthogonal to the axial direction;
   a ball support member configured to support the multiple balls by its axial one end face, and being capable of swinging in the peripheral direction and displacing in the axial direction; and
   a ball displacement preventive member being displaced in such portion of the clearance as is not occupied by the multiple balls when the multiple balls are mounted in the clearance, and configured to prevent displacement of the multiple balls in the peripheral direction.
(2) The angular ball bearing assembling device according to (1), further comprising
   a ball hold member configured to hold the multiple balls by its axial other end face and supporting the multiple balls while holding them in cooperation with the axial one end face of the support member.
(3) The angular ball bearing assembling device according to (1) or (2), further including
   a guide member configured to hold the multiple balls from the diameter-direction inside and diameter-direction outside.
(4) A method for assembling an angular ball bearing including an inner ring, an outer ring and multiple balls, the assembling method being capable of mounting multiple balls into a clearance between the inner and outer rings and capable of collecting the multiple balls from the clearance, the method including:
   making the centers of the inner and outer rings eccentric by a displacement mechanism capable of relatively displacing the inner and outer rings along a plane orthogonal to the axial direction;
   displacing a ball support member, supporting the multiple balls by its axial one end face and configured to swing in the peripheral direction and displacing in the axial direction, in the axial direction together with the multiple balls, and then inserting the ball support member into the clearance;
   aligning the centers of the inner and outer rings with each other by the displacement mechanism, and holding the multiple balls by the inner and outer balls;
   after the ball support member is swung in the peripheral direction to such portion of the clearance as is not occupied by the multiple balls, displacing the ball support member in the axial direction to remove the ball support member outward of the angular ball bearing, and mounting the multiple balls into the clearance;
   disposing a ball displacement preventive member, configured to be disposed in such portion of the clearance as is not occupied by the multiple balls and configured to prevent displacement of the multiple balls in the peripheral direction, in such portion of the clearance as is not occupied by the multiple balls with the multiple balls mounted in the clearance;
   after a rotation mechanism configured to relatively rotate the inner and outer rings rotates the inner and outer rings relatively to thereby displace the multiple balls in the peripheral direction and gather them toward the ball displacement preventive member, removing the ball displacement preventive member outward of the angular ball bearing;
   after the ball support member is displaced in the axial direction to such portion of the clearance as is not occupied by the multiple balls and is inserted there, swinging the ball support member in the peripheral direction to such portion of the clearance as is occupied by the multiple balls, allowing the ball support member to support the multiple balls; and
   after the centers of the inner and outer rings are made eccentric by the displacement mechanism, removing the ball support member together with the multiple balls outwardly of the angular ball bearing to collect the multiple balls from the clearance by displacing the ball support member in the axial direction.
(5) The angular ball bearing assembling method according to (4), wherein
   when the ball support member displaces in the axial direction while supporting the multiple balls, a ball hold member capable of supporting the multiple balls while holding the multiple balls by its axial other end face and sandwiching the multiple balls in cooperation with the axial one end face of the ball support member displaces in the axial direction while holding the multiple balls.
(6) The angular ball bearing assembling method according to (4) and (5), wherein
   when the ball support member displaces in the axial direction while supporting the multiple balls, a guide member holds the multiple balls from the diameter-direction inside and diameter-direction outside thereof.

According to the angular ball bearing assembling device and angular ball bearing assembling method of the invention, mounting and collection of the balls of an angular ball bearing can be automated, thereby enabling enhancement in productivity.

### BRIEF DESCRIPTION OF THE DRAWINGS

Fig. 1 is a perspective view of an assembling device according to an embodiment.
Fig. 2A is a plan view and a section view to explain a ball mounting step.
Fig. 2B is a plan view and a section view to explain the ball mounting step.
Fig. 2C is a plan view and a section view to explain the ball mounting step.
Fig. 2D is a plan view and a section view to explain the ball mounting step.
Fig. 2E is a plan view and a section view to explain the ball mounting step.
Fig. 3A is a plan view and a section view to explain a ball collecting step.
Fig. 3B is a plan view and a section view to explain the ball collecting step.
Fig. 3C is a plan view and a section view to explain the ball collecting step.
Fig. 3D is a plan view and a section view to explain the ball collecting step.
Fig. 3E is a plan view and a section view to explain the ball collecting step.
Fig. 3F is a plan view and a section view to explain the ball collecting step.
Fig. 3G is a plan view and a section view to explain the ball collecting step.
Fig. 3H is a plan view and a section view to explain the ball collecting step.
Fig. 4A is a section view to show how a ball is held by a guide member.
Fig. 4B is a section view to show a state where the ball is inserted into a clearance between inner and outer rings.
Fig. 5A is a section view to explain a conventional differential width grinding method.
Fig. 5B is a section view to explain the conventional differential width grinding method.
Fig. 5C is a section view to explain the conventional differential width grinding method.
Fig. 5D is a section view to explain the conventional differential width grinding method.
Fig. 5E is a section view to explain the conventional differential width grinding method.
Fig. 6A is a section view to explain a second conventional differential width grinding method.
Fig. 6B is a section view to explain the second conventional differential width grinding method.
Fig. 6C is a section view to explain the second conventional differential width grinding method.
Fig. 6D is a section view to explain the second conventional differential width grinding method.

### MODES FOR CARRYING OUT THE INVENTION

Description is given below specifically of an angular ball bearing assembling device and an angular ball bearing assembling method according to an embodiment of the invention with reference to the drawings.

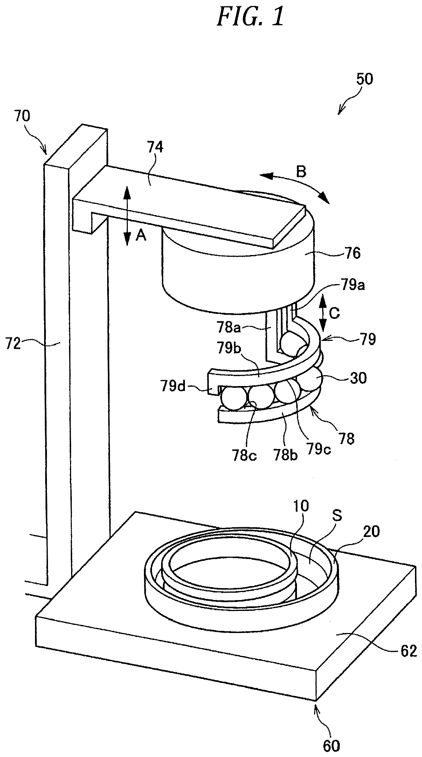

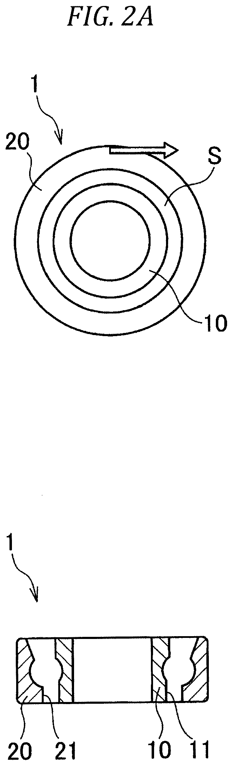

As shown in Fig. 1, an assembling device 50 of this embodiment includes a pedestal 60 for supporting the inner ring 10 and outer ring 20 of an angular ball bearing 1 (see Figs. 2A ∼ 2E), and a ball conveying mechanism 70 for conveying the balls 30 of the angular ball bearing.

On the substantially central portion of the pedestal 60, there is provided an outer ring jig (not shown) for supporting the outer ring 20, while the jig can be displaced integrally with the outer ring 20 by a drive device (not shown) along a plane (which is also hereinafter called an axial-direction orthogonal plane) orthogonal to the axial direction (vertical direction), that is, parallel to the upper surface 62 of the pedestal 60. Here, Fig. 1 shows a state where, as a result that the outer ring 20 is displaced along the axial-direction orthogonal plane by the outer ring jig, the centers of the inner and outer rings 10 and 20 are eccentric.

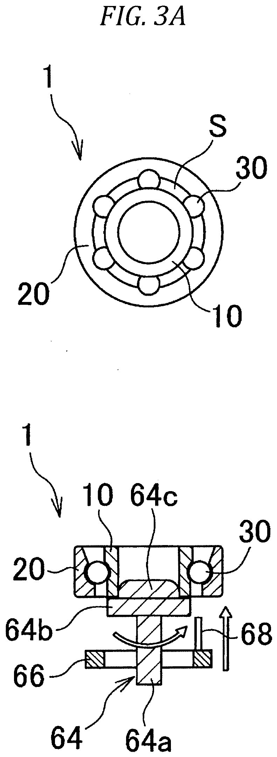

Also, referring to Figs. 3A ∼ 3H as well, on the pedestal 60, there is provided an inner ring jig 64 situated inside the outer ring 20 (outer ring jig) in the diameter direction for supporting the inner ring 10 from below. The inner ring jig 64 includes a shaft portion 64a, a disk portion 64b formed on the upper end of the shaft portion 64a and having an outside diameter substantially equal to the outside diameter of the inner ring 10, and a projecting portion 64c formed on the top of the disk portion 64b and engageable with the inner peripheral surface of the inner ring 10. The inner ring jig 64 can be rotated in the peripheral direction integrally with the inner ring 10 by a drive device (not shown).

Thus, the pedestal 60 includes an outer ring jig serving as a displacement mechanism capable of displacing the inner and outer rings 10 and 20 relative to each other along the axial-direction orthogonal plane, and the inner ring jig 64 serving as a rotation mechanism capable of rotating the inner and outer rings 10 and 20 relative to each other.

The pedestal 60 also includes a cylindrical plate 66 arranged concentrically with the inner ring jig 64 and movable in the axial direction (vertical direction), and a ball gathering pin 68 fixed to the upper surface of the cylindrical plate 66 and extending in the axial direction. Here, the inside diameter of the cylindrical plate 66 is formed slightly larger than the outside diameter of the disk portion 64b of the inner ring jig 64, whereby, even when the cylindrical plate 66 moves upward, it is prevented from interfering with the disk portion 64b. And, while the multiple balls 30 are mounted in a clearance S between the inner and outer rings 10 and 20, the ball gathering pin 68, as described later, can be disposed in a clearance between mutually adjoining balls 30, that is, in such portion that is not occupied by the multiple balls 30, thereby constituting a ball displacement preventive member capable of preventing the multiple balls 30 from displacing in the peripheral direction.

The ball conveying mechanism 70 includes a support pole 72 extending in the axial direction (vertical direction), a support plate 74 supported on the upper side surface of the support pole 72 and extending substantially parallel to the upper surface 62 of the pedestal 60, a holder 76 fixed to the leading-end side lower surface of the support plate 74, a curved arm 78 (ball support member) extending downward from the holder 76 for supporting the multiple balls 30 from below, and a ball hold member 79 extending downward from the holder 76 for holding the multiple balls 30 from above.

The support plate 74 is supported on the side surface of the support pole 72 through a linear guide (not shown) and, by displacing the support plate 74 in the axial direction (in Fig. 1, in the arrow A direction), the holder 76, curved arm 78, ball hold member 79 and multiple balls 30 can be integrally displaced in the axial direction.

The holder 76 is rotatably fixed to the support plate 74 and, by rotating the holder 76 in the peripheral direction (in Fig. 1, in the arrow B direction), the curved arm 78, ball hold member 79 and multiple balls 30 can be swung integrally in the peripheral direction.

The curved arm 78 includes a pillar portion 78a extending downward and an arm portion 78b extending in the peripheral direction from the lower end of the pillar portion 78a for supporting the multiple balls 30 by its upper surface 78c (axial one end face). The arm portion 78b is formed to have a crescent-shaped section with a central angle of 180° or less, its curvature is substantially equal to that of the inner and outer rings 10 and 20, its inside diameter is larger than the outside diameter of the inner ring 10, and its outside diameter is smaller than the inside diameter of the outer ring 20. In the upper surface 78c of the arm portion 78b, there is formed a recessed groove (not shown) for holding the multiple balls 30.

The ball hold member 79 includes a base portion 79a extending downward and a hold portion 79b extending in the peripheral direction from the lower end of the base portion 79a for holding the multiple balls 30 by its lower surface 79c (axial other end face). The hold portion 79b has a crescent-shaped section substantially the same as the arm portion 78b of the curved arm 78, while the lower surface 79c of the hold portion 79b and the upper surface 78c of the arm portion 78 are capable of holding the multiple balls 30 between them. Also, in the lower surface 79c of the hold portion 79b, there is formed a recessed groove (not shown) for holding the multiple balls 30. The hold portion 79b is formed such that its peripheral end extends in the peripheral direction further than the arm portion 78b and, on this peripheral end, there is provided a projection 79d extending downward for preventing the balls 30 from falling in the peripheral direction.

The ball hold member 79 can be displaced in the axial direction (in Fig. 1, in the arrow C direction) relative to the holder 76 by a drive mechanism (not shown) and is capable of restricting and releasing the multiple balls 30 situated between the lower surface 79c of the hold portion 79b and the upper surface 78c of the arm portion 78.

Here, the number of multiple balls 30 to be conveyed by the curved arm 78 and ball hold member 79 is set smaller than the number of balls to be incorporated into an angular ball bearing as a completed product. More specifically, since the arm portion 78b has a crescent-shaped section with a central angle of 180° or less, the number of multiple balls 30 is set such that the peripheral-direction length when the multiple balls 30 are arranged in the peripheral direction with no clearance between them is equal to or less than half the peripheral-direction length of a bearing pitch circle. This eliminates shrink fit when the multiple balls 30 are incorporated into a clearance S between the inner and outer rings 10 and 20 and facilitates collection of the balls from the clearance S.

The thus-structured assembling device 50 is capable of mounting the multiple balls 30 into the clearance S between the inner and outer rings 10 and 20 by the below-mentioned step (A), and capable of collecting the multiple balls 30 from the clearance S by the below-mentioned step (B).

### < (A): Ball Mounting Step>

Firstly, as shown in Fig. 2A, the inner and outer rings 10 and 20 of the angular ball bearing 1 are arranged with their centers aligned with each other.

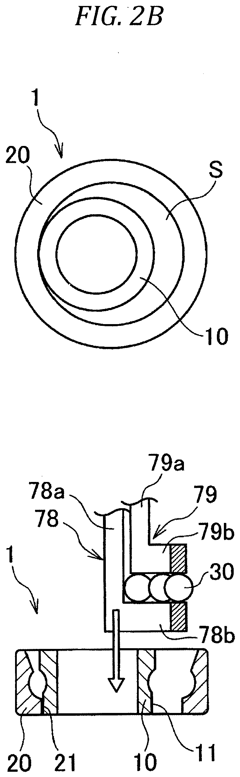

Next, as shown in Fig. 2B, by displacing the outer ring jig along the axial-direction orthogonal plane (in Fig. 2B, in the right direction), the outer ring 20 fixed to the outer ring jig is displaced to bring the inner peripheral surface 21 on the anti-counter bore side (axial other end side; in Fig. 2B, the lower side of the section view) of the outer ring 20 into contact with the outer peripheral surface 11 of the counter bore side (axial other end side; in Fig. 2B, the lower side of the section view) of the inner ring 10. Thus, the centers of the inner and outer rings 10 and 20 are eccentric, the clearance S between the inner and outer rings 10 and 20 has a crescent-shaped section and its maximum diameter-direction width increases, thereby enabling insertion of the multiple balls 30.

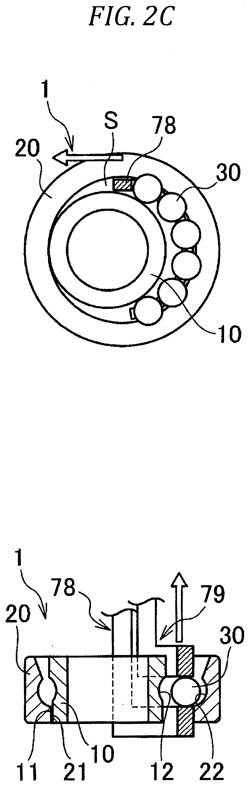

And, as shown in Fig. 2C, after the curved arm 78 and ball hold member 79 holding the multiple balls 30 between them are arranged above the inner and outer rings 10 and 20, by displacing the support plate 74 (see Fig. 1) downward, the multiple balls 30 together with the curved arm 78 and ball hold member 79 are inserted into the clearance S having a crescent-shaped section. Thus, when the curved arm 78 displaces in the axial direction while supporting the multiple balls 30, the ball hold member 79 displaces in the axial direction while holding the multiple balls 30. As a result, the multiple balls 30 are arranged overlapping in the axial direction with the inner ring raceway surface 12 of the inner ring 10 and the outer ring raceway surface 22 of the outer ring 20.

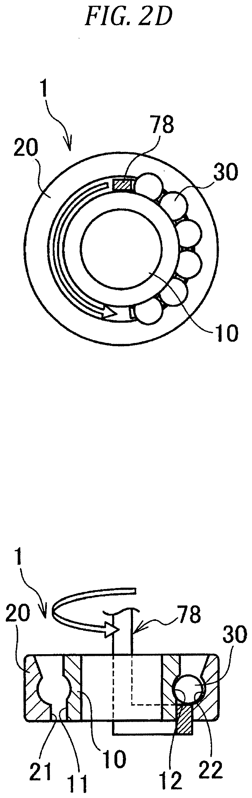

Next, as shown in Fig. 2D, by displacing the outer ring jig along the axial-direction orthogonal plane (in Fig. 2D, in the left direction), the outer ring 20 fixed to the outer ring jig is displaced, the centers of the inner and outer rings 10 and 20 are aligned with each other, and the multiple balls 30 are held by the inner ring raceway surface 12 and outer ring raceway surface 22. After then, the ball hold member 79 is displaced upward, thereby releasing the multiple balls 30.

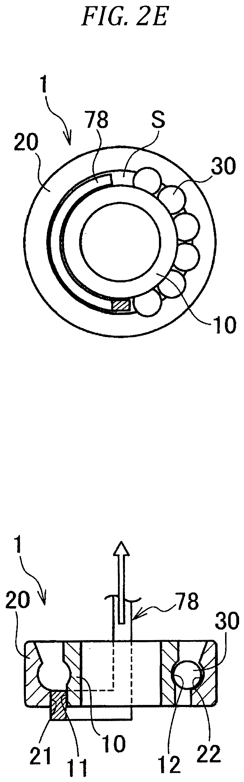

And, as shown in Fig. 2E, by rotating the holder 76 (see Fig. 1), the curved arm 78 is swung in the peripheral direction to such portion of the clearance S between the inner and outer rings 10 and 20 as is not occupied by the multiple balls 30. After then, the support plate 74 (see Fig. 1) is displaced upward, thereby removing the curved arm 78 outwardly of the angular ball bearing 1. Here, as described above, the arm portion 78b of the curved arm 78 is substantially equal in curvature to the inner and outer rings 10 and 20, its inside diameter is larger than the outside diameter of the inner ring 10, and its outside diameter is smaller than the inside diameter of the outer ring 20, whereby the curved arm 78 is prevented from interfering with the inner and outer rings 10 and 20. Thus, it can be removed smoothly outwardly of the angular ball bearing 1.

After the multiple balls 30 are full automatically mounted into the clearance S between the inner and outer rings 20 by the above step, according to a similar method to the above-mentioned conventional differential width grinding method (see Figs. 6A and 6B), the temporary retainer is mounted to temporarily assemble the angular ball bearing, the axial widths (differential width) of the inner and outer rings 10 and 20 is measured, and the grinding amount is calculated. And, after the temporary retainer is collected, the multiple balls 30 are collected by the below-mentioned ball collecting step.

### < (B): Ball Collecting Step >

Next, description is given of a step of collecting the multiple balls 30 from the clearance S between the inner and outer rings 10 and 20 with reference to Figs. 3A ∼ 3H.

Firstly, as shown in Fig. 3A, when the ball gathering pin 68 and balls 30 overlap with each other in the peripheral direction, the ball gathering pin 68 cannot be displaced upward to be inserted into the clearance S. Thus, by rotating the inner ring jig 64 at a low speed, the inner ring 10 is rotated at a low speed to thereby displace (revolve) the multiple balls 30 in the peripheral direction such that the ball gathering pin 68 and balls 30 are offset in the peripheral direction.

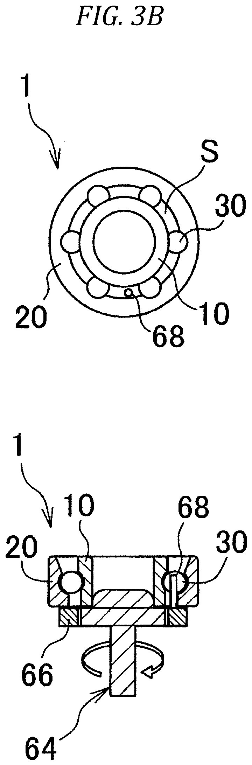

Next, as shown in Fig. 3B, by displacing the cylindrical plate 66 upward, the ball gathering pin 68 is inserted into such portion of the clearance S as intervenes between the mutually adjoining balls 30, that is, a portion not occupied by the multiple balls 30.

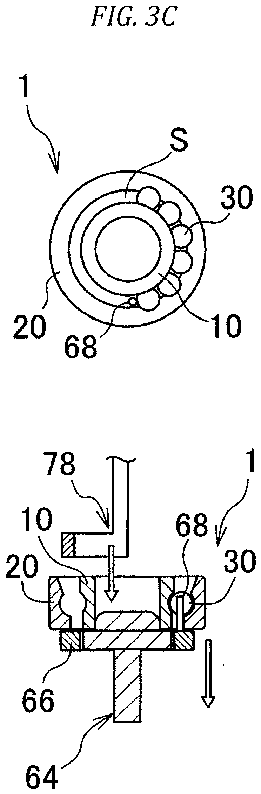

After then, as shown in Fig. 3C, by rotating the inner ring jig 64, the inner ring 10 is rotated, thereby displacing the multiple balls 30 in the peripheral direction to gather them toward the ball gathering pin 68.

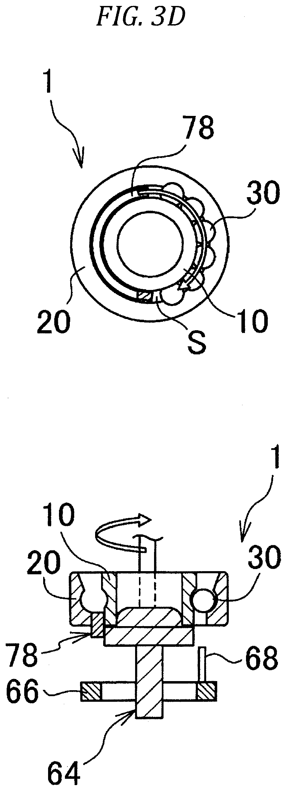

Then, as shown in Fig. 3D, after the curved arm 78 is disposed above the inner and outer rings 10 and 20, the support plate 74 (see Fig. 1) is displaced downward to thereby insert the curved arm 78 into such portion of the clearance S as not occupied by the multiple balls 30.

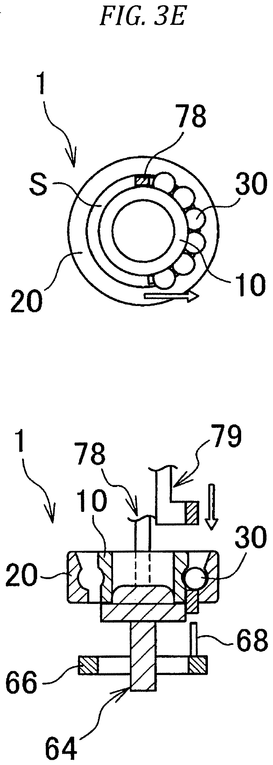

And, as shown in Fig. 3E, after the cylindrical plate 66 is displaced downward to thereby remove the ball gathering pin 68 outwardly of the angular ball bearing 1, by rotating the holder 76 (see Fig. 1), the curved arm 78 is swung in the peripheral direction to such portion of the clearance S as occupied by the multiple balls 30 to allow it to support the multiple balls 30.

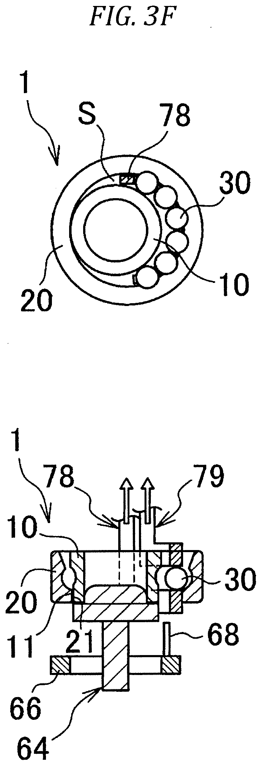

Next, as shown in Fig. 3F, by displacing the outer ring jig along the axial-direction orthogonal plane (in Fig. 3F, in the right direction), the outer ring 20 is displaced, whereby the inner peripheral surface 21 of the anti-counter bore side (axial other end side; in Fig. 3F, the lower side of the section view) of the outer ring 20 is contacted with the outer peripheral surface 11 of the counter bore side (axial other end side; in Fig. 3F, the lower side of the section view) of the inner ring 10. Thus, the centers of the inner and outer rings 10 and 20 are eccentric, the clearance S has a crescent-shaped section and its maximum diameter-direction width increases, thereby enabling removal of the multiple balls 30 from the angular ball bearing 1. Further, after the ball hold plate 79 is disposed above the inner and outer rings 10 and 20, it is displaced downward to thereby hold the multiple balls 30 between the curved arm 78 and ball hold member 79.

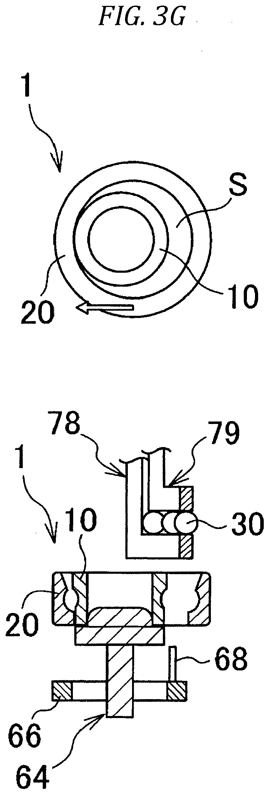

And, as shown in Fig. 3G, the curved arm 78 and ball hold member 79 holding the multiple balls 30 between them are displaced upward by displacing the support plate 74 (see Fig. 1) upward, whereby the multiple balls 30, together with the curved arm 78 and ball hold member 79, are removed outwardly of the angular ball bearing 1, thereby completing the collection of the multiple balls 30.

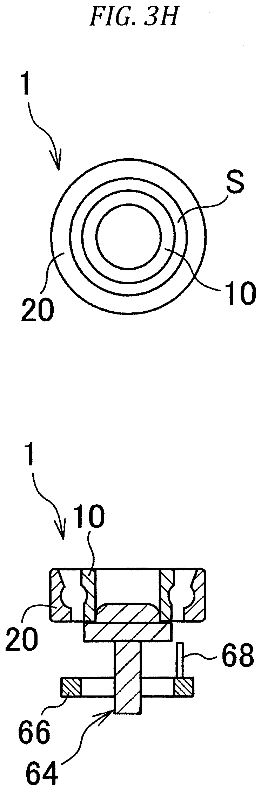

Next, as shown in Fig. 3H, by displacing the outer ring jig along the axial-direction orthogonal plane (in Fig. 3H, in the left direction), the outer ring 20 fixed to the outer ring jig is displaced to align the centers of the inner and outer rings 10 and 20. After then, using a similar method (see Fig. 6D) to the above-mentioned conventional differential width grinding method 2, the inner and outer rings 10 and 20 are ground to thereby adjust their axial widths.

Here, after the collected multiple balls 30 are mounted into a clearance between the inner and outer rings of another angular ball bearing and the differential width of the inner and outer rings is measured according to the above-mentioned (A) step, they are collected again from the clearance between the inner and outer rings according to the above-mentioned (B) step. Thus, the multiple balls 30 can be used repeatedly when measuring the differential width of the inner and outer rings, which can prevent variations in the differential width measurement results that could occur when different balls are used and thus can realize more accurate differential width measurement. Supposing different balls are used in every differential width measurement, generally, since there is present an error of several µm between the diameters of the respective balls, an error occurs in the differential width measurement. On the other hand, in the assembling device 50 of this embodiment, since specific balls 30 can be used as a set, occurrence of the measurement error can be prevented. Further, since the assembling device 50 excludes mechanisms for supplying and discharging the multiple balls 30, the structure can be simplified.

As has been described heretofore, according to the angular ball bearing assembling device 50 of this embodiment, the above-mentioned (A) and (B) steps can automate the mounting and collection of the multiple balls 30 with respect to the angular ball bearing 1, thereby enabling enhancement in productivity.

Also, the angular ball bearing assembling device 50 includes the ball hold member 79 capable of holding the multiple balls 30 by the lower surface 79c and supporting the balls 30 while holding them in cooperation with the upper surface 78c of the curved arm 78, whereby, when the curved arm 78 displaces in the axial direction while supporting the multiple balls 30, the ball hold member 79 displaces in the axial direction while holding the multiple balls 30, so that the fixation of the balls 30 is firm and thus removal of the balls from the curved arm 78 can be prevented.

Here, the invention is not limited to the above embodiment but can be changed or improved properly.

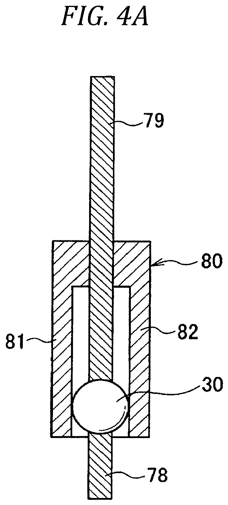

For example, as shown in Fig. 4A, the angular ball bearing assembling device 50 may also include a guide member 80 which, when the curved arm 78 displaces in the axial direction while supporting the multiple balls 30, holds the multiple balls 30 from the diameter-direction inside and diameter-direction outside. The guide member 80 includes first and second guide walls 81 and 82 respectively fixed to the holder 76 and having a substantially L-shaped section, while it holds the multiple balls 30 between the outer peripheral surface of the first guide wall 81 and the inner peripheral surface of the second guide wall 82.

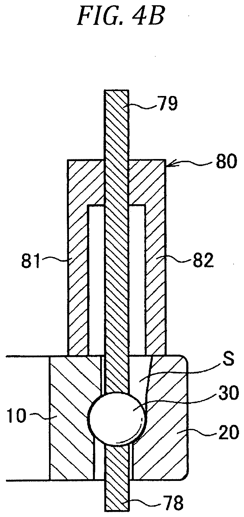

In this structure, when inserting the multiple balls 30 into the clearance S, the guide member 80 displaces downward together with the curved arm 78 and ball hold member 79. Here, as shown in Fig. 4B, the guide member 80 is structured such that, when it is contacted with the upper surfaces of the inner and outer rings 10 and 20, it escapes therefrom. Thus, after the guide member 80 is contacted with the upper surfaces of the inner and outer rings 10 and 20, only the curved arm 78 and ball hold member 79 displace downward to perform insertion of the multiple balls 30.

As described above, provision of the guide member 80 can prevent more effectively the multiple balls 30 from falling from the curved arm 78.

Here, also when collecting the multiple balls 30 from the clearance S, the guide member 80 may be displaced upward together with the curved arm 78 and ball hold member 79 to thereby prevent the multiple balls 30 from falling from the curved arm 78.

Also, in the above embodiment, there is illustrated the structure that the outer ring jig is capable of displacing the outer ring 20 along the axial-direction orthogonal plane and the inner ring jig is capable of rotating the inner ring 10. However, this structure is not limitative so long as the assembling device 50 includes a displacement mechanism capable of displacing the inner and outer rings 10 and 20 along the axial-direction orthogonal plane relative to each other and a rotation mechanism capable of rotating the inner and outer rings 10 and 20 relative to each other. For example, there may be employed a structure that the outer ring jig is capable of rotating the outer ring 20 and the inner ring jig 64 is capable of displacing the inner ring 10 along the axial-direction orthogonal plane, or a structure that the outer ring jig or inner ring jig 64 is capable of displacing and rotating the inner ring 10 or outer ring 20 along the axial-direction orthogonal plane.

Although this application has been described heretofore specifically with reference to the specific embodiment, it is obvious to those skilled in the arm that various changes and modifications are possible within the scope of the invention as defined in the claims.

### DESCRIPTION OF REFERENCE NUMERALS AND SIGNS

1: angular ball bearing 10: inner ring
11: outer peripheral surface
12: inner ring raceway surface
20: outer ring
21: inner peripheral surface
22: outer ring raceway surface 30: ball
50: assembling device
60: pedestal
62: upper surface
64: inner ring jig (rotation mechanism)
64a: shaft portion
64b: disk portion
64c: projecting portion
66: cylindrical plate
68: ball gathering pin (ball displacement preventive member)
70: ball conveying mechanism
72: support pole
74: support plate
76: holder
78: curved arm (ball support member)
78a: pillar portion
78b: arm portion
78c: upper surface (axial one end face)
79: ball hold member
79a: base portion
79b: hold portion
79c: lower surface (axial other end face)
79d: projection
80: guide member
81: first guide wall
82: second guide wall

## Claims

1. An assembling device (50) for assembling an angular ball bearing (1) including an inner ring (10), an outer ring (20) and multiple balls (30), the assembling device being configured to mount multiple balls (30) into a clearance (S) between the inner and outer rings (10, 20) and configured to collect the multiple balls (30) from the clearance (S), and comprising:
a rotation mechanism (64) configured to relatively rotate the inner and outer rings;
a displacement mechanism (60) configured to relatively displace the inner and outer rings (10, 20) along a plane orthogonal to the axial direction;
a ball support member (78) configured to support the multiple balls (30) by its axial one end face, and being capable of swinging in the peripheral direction and displacing in the axial direction; and
a ball displacement preventive member (68) being displaced in such portion of the clearance (S) as is not occupied by the multiple balls (30) when the multiple balls (30) are mounted in the clearance (S) and configured to prevent displacement of the multiple balls (30) in the peripheral direction.

2. The angular ball bearing assembling device (50) according to Claim 1, further comprising a ball hold member (79) configured to hold the multiple balls (30) by its axial other end face and supporting the multiple balls (30) while holding them in cooperation with the axial one end face of the support member (78).

3. The angular ball bearing assembling device (50) according to Claim 1 or 2, further comprising a guide member (80) configured to hold the multiple balls (30) from the diameter-direction inside and diameter-direction outside.

4. A method for assembling an angular ball bearing (1) including an inner ring (10), an outer ring (20) and multiple balls (30), the assembling method being capable of mounting multiple balls into a clearance (S) between the inner and outer rings (10, 20) and capable of collecting the multiple balls (30) from the clearance (S), the method comprising:
making the centers of the inner and outer rings (10, 20) eccentric by a displacement mechanism (60) capable of relatively displacing the inner and outer rings (10, 20) along a plane orthogonal to the axial direction;
displacing a ball support member (78), supporting the multiple balls (30) by its axial one end face and configured to swing in the peripheral direction and displacing in the axial direction, in the axial direction together with the multiple balls, and then inserting the ball support member (78) into the clearance (S);
aligning the centers of the inner and outer rings (10, 20) with each other by the displacement mechanism, and holding the multiple balls by the inner and outer rings;
after the ball support member (78) is swung in the peripheral direction to such portion of the clearance (S) as is not occupied by the multiple balls (30), displacing the ball support member (78) in the axial direction to remove the ball support member (78) outward of the angular ball bearing (1), and mounting the multiple balls (30) into the clearance;
disposing a ball displacement preventive member (68), configured to be disposed in such portion of the clearance (S) as is not occupied by the multiple balls (30) and configured to prevent displacement of the multiple balls (30) in the peripheral direction, in such portion of the clearance (S) as is not occupied by the multiple balls (30) with the multiple balls mounted in the clearance;
after a rotation mechanism (64) configured to relatively rotate the inner and outer rings (10, 20) rotates the inner and outer rings (10, 20) relatively to thereby displace the multiple balls (30) in the peripheral direction and gather them toward the ball displacement preventive member (68), removing the ball displacement preventive member (68) outward of the angular ball bearing;
after the ball support member (78) is displaced in the axial direction to such portion of the clearance (S) as is not occupied by the multiple balls (30) and is inserted there, swinging the ball support member (78) in the peripheral direction to such portion of the clearance (S) as is occupied by the multiple balls (30), allowing the ball support member (78) to support the multiple balls; and
after the centers of the inner and outer rings (10, 20) are made eccentric by the displacement mechanism (60), removing the ball support member (78) together with the multiple balls (30) outwardly of the angular ball bearing to collect the multiple balls (30) from the clearance (S) by displacing the ball support member (78) in the axial direction.

5. The angular ball bearing assembling method according to Claim 4, wherein when the ball support member (78) displaces in the axial direction while supporting the multiple balls (30), a ball hold member (79) capable of supporting the multiple balls (30) while holding the multiple balls (30) by its axial other end face and sandwiching the multiple balls (30) in cooperation with the axial one end face of the ball support member (78) displaces in the axial direction while holding the multiple balls (30).

6. The angular ball bearing assembling method according to Claim 4 or 5, wherein when the ball support member (78) displaces in the axial direction while supporting the multiple balls, a guide member (80) holds the multiple balls (30) from the diameter-direction inside and diameter-direction outside thereof.

## Patentansprüche

1. Zusammenbauvorrichtung (50) zum Zusammenbauen eines Schrägkugellagers (1), das einen Innenring (10), einen Außenring (20) und mehrere Kugeln (30) enthält, wobei die Zusammenbauvorrichtung zum Einsetzen mehrerer Kugeln (30) in einen Zwischenraum (S) zwischen dem Innen- und dem Außenring (10, 20) ausgeführt ist sowie zum Aufnehmen der mehreren Kugeln (30) aus dem Zwischenraum (S) ausgeführt ist, und wobei sie umfasst:
einen Drehungs-Mechanismus (64), der zum relativen Drehen des Innen- und des Außenrings ausgeführt ist;
einen Verschiebungs-Mechanismus (60), der zum relativen Verschieben des Innen- und des Außenrings (10, 20) entlang einer Ebene im rechten Winkel zu der axialen Richtung ausgeführt ist;
ein Kugel-Trageelement (78), das zum Tragen der mehreren Kugeln (30) über seine eine axiale Endfläche ausgeführt ist und in der Umfangsrichtung geschwenkt und in der axialen Richtung verschoben werden kann; sowie
ein Element (68) zum Verhindern von Verschiebung der Kugeln, das in einen Abschnitt des Zwischenraums (S) verschoben wird, der nicht von den mehreren Kugeln (30) eingenommen wird, wenn die mehreren Kugeln (30) in den Zwischenraum eingesetzt werden, und das zum Verhindern von Verschiebung der mehreren Kugeln (30) in der Umfangsrichtung ausgeführt ist.

2. Vorrichtung (50) zum Zusammenbauen eines Schrägkugellagers nach Anspruch 1, die des Weiteren umfasst:
ein Kugel-Halteelement (79), das zum Halten der mehreren Kugeln (30) über seine andere axiale Endfläche ausgeführt ist und die mehreren Kugeln (30) trägt und sie dabei im Zusammenwirken mit der einen axialen Endfläche des Trageelementes (78) hält.

3. Vorrichtung (50) zum Zusammenbauen eines Schrägkugellagers nach Anspruch 1 oder 2, die des Weiteren umfasst:
ein Führungselement (80), das zum Halten der mehreren Kugeln (30) von der Innenseite in Durchmesser-Richtung und der Außenseite in Durchmesser-Richtung ausgeführt ist.

4. Verfahren zum Zusammenbauen eines Schrägkugellagers (1), das einen Innenring (10), einen Außenring (20) und mehrere Kugeln (30) enthält, wobei mit dem Verfahren zum Zusammenbauen mehrere Kugeln in einen Zwischenraum (S) zwischen dem Innen- und dem Außenring (10, 20) eingesetzt werden und die mehreren Kugeln (30) aus dem Zwischenraum (S) aufgenommen werden können, und das Verfahren umfasst:
Herstellen von Exzentrizität zwischen den Mittelpunkten des Innen- und des Außenrings (10, 20) mittels eines Verschiebungs-Mechanismus (60), mit dem der Innen- und der Außenring (10, 20) relativ zueinander entlang einer Ebene im rechten Winkel zu der axialen Richtung verschoben werden können;
Verschieben eines Kugel-Trageelementes (78), das die mehreren Kugeln (30) über seine eine axiale Endfläche trägt und zum Schwenken in der Umfangsrichtung ausgeführt ist, sowie Verschieben in der axialen Richtung zusammen mit den mehreren Kugeln und anschließend Einführen des Kugel-Trageelementes (78) in den Zwischenraum (S);
Ausrichten der Mittelpunkte des Innen- und des Außenrings (10, 20) aufeinander mit dem Verschiebungs-Mechanismus und Halten der mehreren Kugeln durch den Innen- und den Außenring;
Verschieben des Kugel-Trageelementes (78) in der axialen Richtung, um das Kugel-Trageelement (78) aus dem Schrägkugellager (1) nach außen zu entfernen, und Einsetzen der mehreren Kugeln (30) in den Zwischenraum (S) nach Schwenken des Kugel-Trageelementes (78) in der Umfangsrichtung an einen Abschnitt des Zwischenraums (S), der nicht von den mehreren Kugeln (30) eingenommen wird;
Anordnen eines Elementes (68) zum Verhindern von Verschiebung der Kugeln, das zum Verschieben in einen Abschnitt des Zwischenraums (S) ausgeführt ist, der nicht von den mehreren Kugeln (30) eingenommen wird, und das zum Verhindern von Verschiebung der mehreren Kugeln (30) in der Umfangsrichtung ausgeführt ist, in einem Abschnitt des Zwischenraums (S), der nicht von den mehreren Kugeln (30) eingenommen wird, wenn die mehreren Kugeln in den Zwischenraum eingesetzt sind;
Entfernen des Elementes (68) zum Verhindern von Verschiebung der Kugeln aus dem Schrägkugellager nach außen, nachdem ein Drehungs-Mechanismus (64), der zum relativen Drehen des Innen- und des Außenrings ausgeführt ist, den Innen- und den Außenring (10, 20) relativ zueinander gedreht hat, um so die mehreren Kugeln (30) in der Umfangsrichtung zu verschieben und sie in Richtung des Elementes (68) zum Verhindern von Verschiebung der Kugeln zusammenzuführen;
Schwenken des Kugel-Trageelementes (78) in der Umfangsrichtung an einen Abschnitt des Zwischenraums (S), der von den mehreren Kugeln (30) eingenommen wird, so dass das Kugel-Trageelement (78) die mehreren Kugeln tragen kann, nachdem das KugelTrageelement (78) in der axialen Richtung an einen Abschnitt des Zwischenraums (S) verschoben worden ist, der nicht von den mehreren Kugeln (30) eingenommen wird, und dort eingeführt worden ist; und I
Entfernen des Kugel-Trageelementes (78) zusammen mit den mehreren Kugeln (30) aus dem Schrägkugellager nach außen, um die mehreren Kugeln (30) aus dem Zwischenraum (S) aufzunehmen, durch Verschieben des Kugel-Trageelementes (78) in der axialen Richtung, nachdem durch den Verschiebungs-Mechanismus (60) Exzentrizität zwischen den Mittelpunkten des Innen- und des Außenrings (10, 20) hergestellt worden ist.

5. Verfahren zum Zusammenbauen eines Schrägkugellagers nach Anspruch 4, wobei, wenn das Kugel-Trageelement (78) in der axialen Richtung verschoben wird und dabei die mehreren Kugeln (30) trägt, ein Kugel-Halteelement (79), das die mehreren Kugeln (30) tragen kann und dabei die mehreren Kugeln (30) über seine andere axiale Endfläche hält und die mehreren Kugeln (30) im Zusammenwirken mit der einen axialen Endfläche des Kugel-Trageelementes (78) einschließt, in der axialen Richtung verschoben wird und dabei die mehreren Kugeln (30) hält.

6. Verfahren zum Zusammenbauen eines Schrägkugellagers (1) nach Anspruch 4 oder 5, wobei, wenn das Kugel-Trageelement (78) in der axialen Richtung verschoben wird und dabei die mehreren Kugeln trägt, ein Führungselement (80) die mehreren Kugeln (30) von der Innenseite in Durchmesser-Richtung und der Außenseite in Durchmesser-Richtung hält.

## Revendications

1. Dispositif d'assemblage (50) permettant d'assembler un roulement à billes angulaire (1) comprenant une bague interne (10), une bague externe (20) et de multiples billes (30), le dispositif d'assemblage étant configuré pour monter de multiples billes (30) dans un espace (S) ménagé entre les bagues interne et externe (10, 20) et étant configuré pour recueillir les multiples billes (30) à partir de l'espace (S), et comprenant :
un mécanisme de rotation (64) configuré pour faire tourner l'une par rapport à l'autre les bagues interne et externe,
un mécanisme de déplacement (60) configuré pour déplacer l'une par rapport à l'autre les bagues interne et externe (10, 20) le long d'un plan orthogonal à la direction axiale,
un élément de support de billes (78) configuré pour supporter les multiples billes (30) par sa première face d'extrémité axiale, et pouvant osciller dans la direction périphérique et se déplacer dans la direction axiale, et
un élément de prévention de déplacement de billes (68) qui est déplacé dans une partie de l'espace (S) qui n'est pas occupée par les multiples billes (30), lorsque les multiples billes (30) sont montées dans l'espace (S), et qui est configuré pour empêcher tout déplacement des multiples billes (30) dans la direction périphérique.

2. Dispositif d'assemblage de roulement à billes angulaire (50) selon la revendication 1, comprenant en outre :
un élément de maintien de billes (79) configuré pour maintenir les multiples billes (30) par son autre face d'extrémité axiale, et qui supporte les multiples billes (30) tout en les maintenant par coopération avec la première face d'extrémité axiale de l'élément de support (78).

3. Dispositif d'assemblage de roulement à billes angulaire (50) selon la revendication 1 ou la revendication 2, comprenant en outre :
un élément de guidage (80) configuré pour maintenir les multiples billes (30) à partir de l'intérieur dans la direction du diamètre et de l'extérieur dans la direction du diamètre.

4. Procédé permettant d'assembler un roulement à billes angulaire (1) incluant une bague interne (10), une bague externe (20) et de multiples billes (30), le procédé d'assemblage étant destiné à réaliser le montage de multiples billes dans un espace (S) entre les bagues interne et externe (10, 20) et pouvant recueillir les multiples billes (30) à partir de l'espace (S), le procédé comprenant :
l'action consistant à rendre excentriques les centres des bagues interne et externe (10, 20) grâce au mécanisme de déplacement (60) pouvant déplacer l'une par rapport à l'autre les bagues interne et externe (10, 20) le long d'un plan orthogonal à la direction axiale,
le déplacement d'un élément de support de billes (78) qui supporte les multiples billes (30) par sa première face d'extrémité axiale et qui est configuré pour pivoter dans la direction périphérique et se déplacer dans la direction axiale, en même temps que les multiples billes, puis l'insertion de l'élément de support de billes (78) dans l'espace (S),
l'alignement des centres des bagues interne et externe (10, 20) l'un à l'autre grâce au mécanisme de déplacement et le maintien des multiples billes par les bagues interne et externe,
le déplacement de l'élément de support de billes (78) dans la direction axiale pour retirer l'élément de support de billes (78) vers l'extérieur du roulement à billes angulaire (1), après que l'élément de support de billes (78) a été pivoté dans la direction périphérique jusqu'à une partie de l'espace (S) qui n'est pas occupée par les multiples billes (30), et le montage des multiples billes (30) dans l'espace,
le dépôt d'un élément empêchant tout déplacement de billes (68), configuré pour être déposé dans la partie de l'espace (S) qui n'est pas occupée par les multiples billes (30), et configuré pour empêcher tout déplacement des multiples billes (30) dans la direction périphérique dans la partie de l'espace (S) qui n'est pas occupée par les multiples billes (30), les multiples billes étant montées dans l'espace,
la suppression de l'élément empêchant tout déplacement de billes (68) vers l'extérieur du roulement à billes angulaire, après qu'un mécanisme de rotation (64), configuré pour faire tourner l'une par rapport à l'autre les bagues interne et externe (10, 20), a fait tourner l'une par rapport à l'autre les bagues interne et externe (10, 20) pour déplacer ainsi les multiples billes (30) dans la direction périphérique et les réunir vers l'élément empêchant tout déplacement de billes (68),
le pivotement de l'élément de support de billes (78) dans la direction périphérique vers la partie de l'espace (S) qui est occupée par les multiples billes (30), après que l'élément de support de billes (78) a été déplacé dans la direction axiale vers la partie de l'espace (S) qui n'est pas occupée par les multiples billes (30) et qui est insérée ici, ce qui permet à l'élément de support de billes (78) de supporter les multiples billes, et
la suppression de l'élément de support de billes (78) en même temps que les multiples billes (30) vers l'extérieur du roulement à billes angulaire afin de recueillir les multiples billes (30) provenant de l'espace (S) en déplaçant l'élément de support de billes (78) dans la direction axiale, après que les centres des bagues interne et externe (10, 20) ont été rendus excentriques grâce au mécanisme de déplacement (60).

5. Procédé d'assemblage de roulements à billes angulaire selon la revendication 4, dans lequel
lorsque l'élément de support de billes (78) se déplace dans la direction axiale tout en supportant les multiples billes (30), un élément de maintien de billes (79) pouvant supporter les multiples billes (30), tout en maintenant les multiples billes (30) par son autre face d'extrémité axiale et en enserrant les multiples billes (30) avec la première face d'extrémité axiale de l'élément de support de billes (78), se déplace dans la direction axiale tout en maintenant les multiples billes (30).

6. Procédé d'assemblage de roulements à billes angulaire selon la revendication 4 ou la revendication 5, dans lequel
lorsque l'élément de support de billes (78) se déplace dans la direction axiale tout en supportant les multiples billes, un élément de guidage (80) maintient les multiples billes (30) à partir de sa partie intérieure dans la direction du diamètre et de sa partie extérieure dans la direction du diamètre.
